# EUROPÄISCHE PATENTANMELDUNG

(11) **EP 4 220 401 A1**
(43) Veröffentlichungstag der Anmeldung: **02.08.2023**
(21) Anmeldenummer: 22154182.4
(22) Anmeldetag: 31.01.2022
(51) Int. Cl.: G06F 9/50, G06F 9/455, G06F 11/30

(54) **VERFAHREN UND SYSTEM ZUR BEREITSTELLUNG VON STEUERUNGSANWENDUNGEN**

(71) Anmelder: Siemens Aktiengesellschaft, 80333 München (DE)
(72) Erfinder: Albrecht, Harald, 90475 Nürnberg (DE); Knierim, Christian, 81373 München (DE)
(74) Vertreter: Siemens Patent Attorneys

(57) **Zusammenfassung**

Zur Bereitstellung von Steuerungsanwendungen sind Softwareimplementierte Container (103) vorgesehen, die jeweils in eine auf einem Host (100) eingerichtete Container-Laufzeitumgebung (102) ladbar und dort ausführbar sind. Aus Container-Konfigurationsinformationen (131) werden jeweils für den jeweiligen Container Nutzungsinformationen extrahiert. Anhand der Nutzungsinformationen werden für in ein Host-Dateisystem (104) einzubindende Verzeichnisse (140), die für die Container entsprechend den Container-Konfigurationsinformationen vorgesehen sind, jeweils durch ein Host-Betriebssystem (101) umzusetzende Speicherkontingent-Richtlinien (141) zugeordnet. Die Container (103) werden anhand der jeweiligen Container-Konfigurationsinformationen (131) initialisiert. Dabei werden die für die Container jeweils vorgesehenen Verzeichnisse (140) unter Anwendung der zugeordneten Speicherkontingent-Richtlinien (141) in das Host-Dateisystem (104) eingebunden und hinsichtlich einer Speichernutzung der jeweiligen Container mittels einer Speicherkontingent-Datenbank (110) überwacht.

## Beschreibung

Die vorliegende Erfindung betrifft ein Verfahren zur Bereitstellung von Steuerungsanwendungen, insbesondere Steuerungsanwendungen in einem industriellen Automatisierungssystem, sowie ein System, das zur Durchführung des Verfahrens geeignet ist.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Hosts oder virtuelle Maschinen eines industriellen Automatisierungssystems verteilt werden.

In der älteren internationalen Patentanmeldung mit dem Anmeldeaktenzeichen PCT/EP2021/070525 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Die ältere internationale Patentanmeldung mit dem Anmeldeaktenzeichen PCT/EP2021/068060 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

Software-implementierten Container-Instanzen kann auf einem Host-System zur Laufzeit persistenter Speicher zugewiesen werden. Hierdurch kann ein Unterverzeichnis eines Host-Dateisystems beispielsweise mittels bind mount in eine Container-Instanz eingehängt werden. Ein Betreiber einer Container-Laufzeitumgebung kann einen persistenten Speicherbereich insbesondere mittels übergebener Kommandozeilenparameter oder vordefinierter Deployment-Dateien, wie Docker Compose Files oder Kubernetes Deployment-Dateien, zuweisen. Üblicherweise erfolgt dies bei einem Start der jeweiligen Container-Instanz. Auf diese Weise wird definiert, welcher persistente Speicherbereich an welcher Stelle in eine Container-Instanz einzuhängen ist.

Grundsätzlich können sich mehrere unterschiedliche oder gleichartige Container-Instanzen zum Datenaustausch untereinander den zugewiesenen Speicherbereich teilen. In diesem Fall wird beispielsweise dasselbe Unterverzeichnis des Host-Dateisystems in unterschiedliche Container-Instanzen eingehängt. Auch bei unterschiedlichem zugewiesenen Speicherbereich pro Container-Instanz greifen unterschiedliche Container-Instanzen zumindest auf dasselbe Dateisystem zu. Insbesondere ist hierbei sicherzustellen, dass ein böswilliger Benutzer bzw. Angreifer nicht beliebig Speicherplatz für eine gestartete Container-Instanz allokieren kann, um damit andere Container-Instanzen oder gar das jeweilige Host-System in seiner Betriebssicherheit zu beeinträchtigen. Aus diesem Grund ist eine hinreichende Absicherung von an unterschiedliche Container-Instanzen zugewiesenen Speicherbereichen auf demselben Host-Dateisystem von zentraler Bedeutung.

Der vorliegenden Erfindung liegt die Aufgabe zugrunde, ein Verfahren zur Bereitstellung Steuerungsanwendungen mittels Container-Virtualisierung zu schaffen, das eine effiziente und zuverlässige Absicherung von an Container-Instanzen zugewiesenen persistenten Speicherbereichen eines Host-Dateisystems gewährleistet, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 16 angegebenen Merkmalen gelöst. Vorteilhafte Weiterbildungen sind in den abhängigen Ansprüchen angegeben.

Entsprechend dem erfindungsgemäßen Verfahren werden Steuerungsanwendungen mittels Software-implementierten Containern bereitgestellt, die jeweils in eine auf einem Host eingerichtete Container-Laufzeitumgebung ladbar und dort ausführbar sind. Vorzugsweise sind Container jeweils dafür ausgestaltet und eingerichtet, von anderen Containern oder Container-Gruppen, z.B. Pods, isoliert innerhalb der Container-Laufzeitumgebung auf einem Host-Betriebssystem abzulaufen. Insbesondere nutzen die Container jeweils gemeinsam mit anderen auf dem Host ablaufenden Containern einen Kernel des Host-Betriebssystems. Grundsätzlich können für die Container alternativ zu Docker Containern auch andere Micro-Virtualisierungskonzepte, wie Snaps, verwendet werden. Speicherabbilder für die Container können beispielsweise aus einem durch eine Vielzahl von Nutzern lesend bzw. schreibend zugreifbaren Speicher- und Bereitstellungssystem, wie Docker Hub oder eine andere Container Registry, abgerufen werden.

Vorzugsweise ist die Container-Laufzeitumgebung eine Container Engine, durch die ein Anlegen, Löschen bzw. Verknüpfen von virtuellen Ressourcen erfolgt. Dabei umfassen die virtuellen Ressourcen neben Containern auch virtuelle Kommunikationsnetze und diesen zugeordnete Verbindungen. Beispielsweise kann die Container-Laufzeitumgebung eine Docker Engine oder einen Snap Core umfassen, die bzw. der auf dem Host abläuft.

Aus Container-Konfigurationsinformationen werden erfindungsgemäß jeweils für den jeweiligen Container Nutzungsinformationen extrahiert. Die Nutzungsinformationen umfassen beispielsweise jeweils eine Container-Speicherabbild-Kennung, eine Container-Kennung bzw. eine digitale Signatur der jeweiligen Container-Konfigurationsinformationen, insbesondere auch in Kombination dieser Elemente. Anhand der Nutzungsinformationen werden für in ein Host-Dateisystem einzubindende Verzeichnisse, die für die Container entsprechend den Container-Konfigurationsinformationen vorgesehen sind, jeweils durch das Host-Betriebssystem umzusetzende Speicherkontingent-Richtlinien zugeordnet. Dabei können die Container-Konfigurationsinformationen jeweils eine Container-Konfigurationsdatei oder Kommandozeilenparameter umfassen. Des Weiteren handelt es sich beim Host-Dateisystem nicht zwingend um ein Host-internes Dateisystem, sondern um ein dem Host zugeordnetes Dateisystem. Somit ist auch eine Verwendung eines externen Dateisystems möglich, insbesondere eines NFS-Dateisystems (network file system) oder eines SAN-Dateisystems (storage area network).

Darüber hinaus werden die Container erfindungsgemäß anhand der jeweiligen Container-Konfigurationsinformationen initialisiert, insbesondere erzeugt. Dabei werden die für die Container jeweils vorgesehenen Verzeichnisse unter Anwendung der zugeordneten Speicherkontingent-Richtlinien in das Host-Dateisystem eingebunden und hinsichtlich einer Speichernutzung der jeweiligen Container mittels einer Speicherkontingent-Datenbank überwacht. Vorzugsweise wird die Speichernutzung der Container jeweils in der Speicherkontingent-Datenbank erfasst und fortlaufend aktualisiert.

Durch eine Überwachung der Speichernutzung mittels der Speicherkontingent-Datenbank sowie durch eine Zuordnung von Container-Instanzen zu anzuwendenden Speicherkontingent-Richtlinien ist es insbesondere nicht erforderlich, dass für die Container individuell jeweils passende Benutzer oder Benutzergruppen im jeweiligen Host angelegt werden und dass Zugriffsrechte auf durch die Container genutzte Verzeichnisse dementsprechend angepasst werden. Gerade bei einer Vielzahl innerhalb einer Container-Laufzeitumgebung auf einem Host ablaufender Container würde dies zu einem hohen administrativen Aufwand bzw. zu Sicherheitsrisiken führen. Vielmehr ist es bei der Überwachung der Speichernutzung mittels der Speicherkontingent-Datenbank beispielsweise ausreichend, wenn für Container-Rechenprozesse jeweils ein Prozess-Identifikator erfasst wird, die Prozess-Identifikatoren auf Container-Speicherkontingent-Identifikatoren abgebildet werden und anhand der Container-Speicherkontingent-Identifikatoren sowie der Speicherkontingent-Datenbank eine jeweils aktuelle Speichernutzung ermittelt werden kann.

Entsprechend einer vorteilhaften Ausgestaltung der vorliegenden Erfindung wird zur Umsetzung der zugeordneten Speicherkontingent-Richtlinien jeweils pro Container ein Eintrag in der Speicherkontingent-Datenbank angelegt. Insbesondere kann für die zugeordneten Speicherkontingent-Richtlinien jeweils pro Container und Benutzer oder Benutzergruppe ein Eintrag in der Speicherkontingent-Datenbank angelegt werden. Dies ermöglicht eine besonders effiziente und zuverlässige Überwachung der Speichernutzung im Host-Dateisystem durch die Container. Außerdem können mit obiger Ausgestaltung der vorliegenden Erfindung für Container, die Prozesse mehrerer unterschiedlicher Benutzer umfassen, Benutzer- bzw. Benutzergruppenbeschränkungen vorgesehen werden. Ein weiterer Vorteil ist, dass Benutzer- bzw. Benutzergruppen Container-Instanz-spezifisch hinsichtlich ihrer Speichernutzung beschränkt werden können.

Vorzugsweise wird ein Rechenprozess für den jeweiligen Container gestartet, wenn dieser initialisiert wird. Dabei ist jedem Rechenprozess ein Prozess-Identifikator zugeordnet. Außerdem wird jedem Eintrag in der Speicherkontingent-Datenbank ein Container-Speicherkontingent-Identifikator zugeordnet, so dass Zuordnungen zwischen den Prozess-Identifikatoren und den Container-Speicherkontingent-Identifikatoren erstellt werden können. Vorteilhafterweise werden die jeweiligen Prozess-Identifikatoren bei Schreibzugriffen der für die Container gestarteten Rechenprozesse auf das Host-Dateisystem erfasst. Anhand oben genannter Zuordnungen werden die jeweiligen Container-Speicherkontingent-Identifikatoren ermittelt. Damit kann die Speichernutzung der Container auf einfache Weise und zuverlässig jeweils anhand von Einträgen in der Speicherkontingent-Datenbank überwacht werden, die den ermittelten Container-Speicherkontingent-Identifikatoren zugeordnet sind. Insbesondere kann auf dieser Grundlage bei den Schreibzugriffen der für die Container gestarteten Rechenprozesse auf das Host-Dateisystem eine aktuelle Speichernutzung der jeweiligen Container ermittelt werden, wodurch der jeweilige Eintrag in der Speicherkontingent-Datenbank dementsprechend aktualisiert wird.

Entsprechend einer weiteren vorteilhaften Ausgestaltung der vorliegenden Erfindung wird für jede Zuordnung zwischen einem Prozess-Identifikator und einem Container-Speicherkontingent-Identifikator ein Eintrag in einer Container-Rechenprozess-Datenbank erstellt. Damit umfasst jeder Eintrag in der Container-Rechenprozess-Datenbank eine Verknüpfung zu einer jeweils zugeordneten Speicherkontingent-Richtlinie. Vorzugsweise wird die Container-Rechenprozess-Datenbank durch einen in einem Kernel-Modus ablaufenden Rechenprozess verwaltet. Zugriffe auf die Container-Rechenprozess-Datenbank erfolgen bevorzugt über Betriebssystemaufrufe bzw. Syscalls. Hierdurch können zusätzliche Performance-Steigerungen erzielt werden. Dementsprechend kann auch die Speicherkontingent-Datenbank durch einen in einem Kernel-Modus ablaufenden Rechenprozess verwaltet werden, wobei Zugriffe auf das Host-Dateisystem durch für die Container gestartete Rechenprozesse über Betriebssystemaufrufe bzw. Syscalls erfolgen.

Die Anwendung der vorliegenden Erfindung ist auch in Szenarien möglich und vorteilhaft, in denen mehrere Hosts vorgesehen sind, auf denen jeweils eine Container-Laufzeitumgebung eingerichtet ist und die ein gemeinsames Host-Dateisystem nutzen. Anhand der aus den Container-Konfigurationsinformationen extrahierten Nutzungsinformationen werden für in das gemeinsame Host-Dateisystem einzubindende Container-Verzeichnisse Speicherkontingent-Richtlinien zugeordnet. Die Container-Verzeichnisse werden dann unter Anwendung der zugeordneten Speicherkontingent-Richtlinien in das gemeinsame Host-Dateisystem eingebunden und hinsichtlich ihrer Speichernutzung mittels einer gemeinsamen Speicherkontingent-Datenbank überwacht. Insbesondere können die Container jeweils von einem Host auf einen anderen Host zur dortigen Ausführung migriert bzw. auf mehreren Hosts zeitgleich ausgeführt werden. Dies ermöglicht sowohl eine verbesserte Lastverteilung als auch eine erhöhte Verfügbarkeit der mittels der Container bereitgestellten Steuerungsanwendungen.

Darüber hinaus kann eine mehreren Hosts zugeordnete Orchestrierungskomponente vorgesehen sein, die ein Anlegen, ein Löschen bzw. eine Änderung der Container erfasst und die Container mit ihrem jeweiligen Ausführungsstatus registriert. Dabei umfasst das Anlegen, das Löschen bzw. die Änderung der Container jeweils ein Allokieren oder Freigeben von Ressourcen im jeweiligen Host bzw. im gemeinsamen Host-Dateisystem. Somit ermöglicht die Orchestrierungskomponente eine besonders effiziente und zuverlässige Verwaltung von System-Ressourcen.

Das erfindungsgemäße System zur Bereitstellung von Steuerungsanwendungen ist zur Durchführung eines Verfahrens entsprechend vorangehenden Ausführungen vorgesehen und umfasst zumindest einen Host, zumindest eine auf dem zumindest einen Host eingerichtete Container-Laufzeitumgebung sowie mehrere Software-implementierte Container zur Bereitstellung der Steuerungsanwendungen. Die Container sind jeweils in die zumindest eine auf dem zumindest einen Host eingerichtete Container-Laufzeitumgebung ladbar und dort ausführbar. Der zumindest eine Host ist dafür eingerichtet und ausgestaltet, aus Container-Konfigurationsinformationen jeweils für den jeweiligen Container Nutzungsinformationen zu extrahieren und anhand der Nutzungsinformationen für in ein Host-Dateisystem einzubindende Verzeichnisse, die für die Container entsprechend den Container-Konfigurationsinformationen vorgesehen sind, jeweils durch ein Host-Betriebssystem umzusetzende Speicherkontingent-Richtlinien zuzuordnen.

Darüber hinaus ist der zumindest eine Host erfindungsgemäß dafür eingerichtet und ausgestaltet, die Container anhand der jeweiligen Container-Konfigurationsinformationen zu initialisieren. Außerdem ist der Host dafür eingerichtet und ausgestaltet, die für die Container jeweils vorgesehenen Verzeichnisse unter Anwendung der zugeordneten Speicherkontingent-Richtlinien in das Host-Dateisystem einzubinden und hinsichtlich einer Speichernutzung der jeweiligen Container mittels einer Speicherkontingent-Datenbank zu überwachen.

Die vorliegende Erfindung wird nachfolgend an einem Ausführungsbeispiel anhand der Zeichnung näher erläutert. Es zeigt
- Figur 1: ein System zur Bereitstellung von Steuerungsanwendungen mittels Software-implementierter Container,
- Figur 2: ein Ablaufdiagramm zur Initialisierung und Nutzung einer Speicherkontingent-Datenbank des in Figur 1 dargestellten Systems,
- Figur 3: ein System zur Bereitstellung von Steuerungsanwendungen mit mehreren Hosts und einem gemeinsamen Host-Dateisystem.

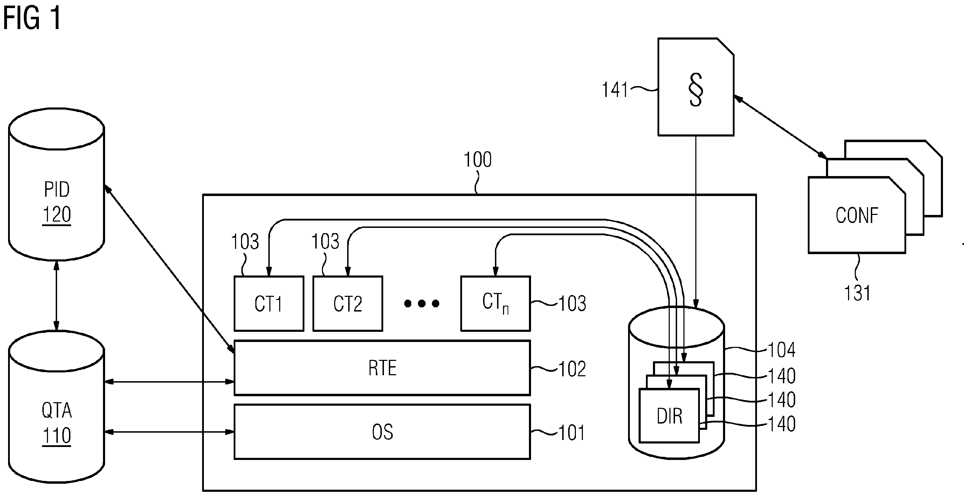

Das in Figur 1 dargestellte System zur Bereitstellung von Steuerungsanwendungen umfasst einen Host 100 mit einer auf dem Host 100 eingerichteten Container-Laufzeitumgebung 102, die auf einem Host-Betriebssystem 101 abläuft. Die Steuerungsanwendungen können insbesondere Funktionen von Geräten eines industriellen Automatisierungssystems, beispielsweise Steuerungs- und Überwachungsfunktionen, oder andere zeitkritische Dienste implementieren.

Außerdem sind mehrere Software-implementierte Container 103 zur Bereitstellung der Steuerungsanwendungen vorgesehen. Die Container 103 sind jeweils in die auf dem Host 100 eingerichtete Container-Laufzeitumgebung 102 ladbar und dort ausführbar. Dabei ist der Host 100 dafür eingerichtet und ausgestaltet, aus Container-Konfigurationsinformationen 131 jeweils für den jeweiligen Container 103 Nutzungsinformationen zu extrahieren. Die Container-Konfigurationsinformationen 131 können jeweils eine Container-Konfigurationsdatei, wie ein Docker Compose File, oder Kommandozeilenparameter umfassen. Die Nutzungsinformationen können insbesondere jeweils eine Container-Speicherabbild-Kennung (Image-Label), eine Container-Kennung (Container-Label), Namespace-Bezeichnungen, Laufzeitkonfigurationen, per Deployment-Informationen zugewiesene Prozess-Privilegien bzw. eine digitale Signatur der jeweiligen Container-Konfigurationsdatei 131 umfassen, insbesondere auch eine Kombination dieser Elemente.

Anhand der Nutzungsinformationen werden für in ein Host-Dateisystem 104 einzubindende Verzeichnisse 140, die für die Container 103 entsprechend den Container-Konfigurationsinformationen vorgesehen sind, jeweils durch das Host-Betriebssystem 101 umzusetzende Speicherkontingent-Richtlinien 141 zugeordnet. Darüber hinaus werden die Container 103 anhand der jeweiligen Container-Konfigurationsinformationen 131 erzeugt und initialisiert. Unter Anwendung der zugeordneten Speicherkontingent-Richtlinien 141 werden die für die Container jeweils vorgesehenen Verzeichnisse 140 in das Host-Dateisystem 104 eingebunden und hinsichtlich einer Speichernutzung der jeweiligen Container 103 mittels einer Speicherkontingent-Datenbank 110 überwacht. Insbesondere wird die Speichernutzung der Container 103 jeweils in der Speicherkontingent-Datenbank 110 erfasst. Hierzu wird vorteilhafterweise jedem Eintrag in der Speicherkontingent-Datenbank 110 ein Container-Speicherkontingent-Identifikator zugeordnet.

Zur Umsetzung der zugeordneten Speicherkontingent-Richtlinien 141 wird jeweils pro Container 103 ein Eintrag in der Speicherkontingent-Datenbank 110 angelegt. Soll eine Speichernutzung auch auf Benutzer- bzw. Benutzergruppenebene berücksichtigt werden, kann für die zugeordneten Speicherkontingent-Richtlinien 141 jeweils pro Container 103 und Benutzer oder Benutzergruppe ein Eintrag in der Speicherkontingent-Datenbank 110 angelegt werden. Aus Performance-Gründen wird die Speicherkontingent-Datenbank 110 vorzugsweise durch einen in einem Kernel-Modus ablaufenden Rechenprozess verwaltet. Außerdem erfolgen Zugriffe auf das Host-Dateisystem 104 durch für die Container 103 gestartete Rechenprozesse vorteilhafterweise über Syscalls.

Mit Initialisierung der Container 103 wird jeweils ein Rechenprozess für den jeweiligen Container 103 gestartet. Dabei ist jedem Rechenprozess ein Prozess-Identifikator zugeordnet, über den auch eine Container-Instanz bei Schreibzugriffen auf das Host-Dateisystem 104 identifiziert werden kann. Aus diesem Grund werden Zuordnungen zwischen den Prozess-Identifikatoren und den Container-Speicherkontingent-Identifikatoren erstellt und in einer Container-Rechenprozess-Datenbank 120 gespeichert.

Bei Schreibzugriffen der für die Container 103 gestarteten Rechenprozesse auf das Host-Dateisystem 104 werden die jeweiligen Prozess-Identifikatoren erfasst. Anhand der in der Container-Rechenprozess-Datenbank 120 gespeicherten Zuordnungen werden die jeweiligen Container-Speicherkontingent-Identifikatoren ermittelt, so dass die Speichernutzung der Container 103 jeweils anhand den ermittelten Container-Speicherkontingent-Identifikatoren zugeordneten Einträgen in der Speicherkontingent-Datenbank 110 überwacht werden kann. Insgesamt wird bei den Schreibzugriffen der für die Container 103 gestarteten Rechenprozesse auf das Host-Dateisystem 104 eine aktuelle Speichernutzung der jeweiligen Container 103 ermittelt. Dementsprechend wird der jeweilige Eintrag in der Speicherkontingent-Datenbank 110 aktualisiert.

Im vorliegenden Ausführungsbeispiel wird für jede Zuordnung zwischen einem Prozess-Identifikator und einem Container-Speicherkontingent-Identifikator ein Eintrag in der Container-Rechenprozess-Datenbank 120 erstellt. Damit umfasst jeder Eintrag in der Container-Rechenprozess-Datenbank 120 eine Verknüpfung zu einer jeweils zugeordneten Speicherkontingent-Richtlinie 141. Analog zur Verwaltung der Speicherkontingent-Datenbank 110 wird auch die Container-Rechenprozess-Datenbank 120 durch einen in einem Kernel-Modus ablaufenden Rechenprozess verwaltet wird, Dabei erfolgen Zugriffe auf die Container-Rechenprozess-Datenbank vorzugsweise über Syscalls.

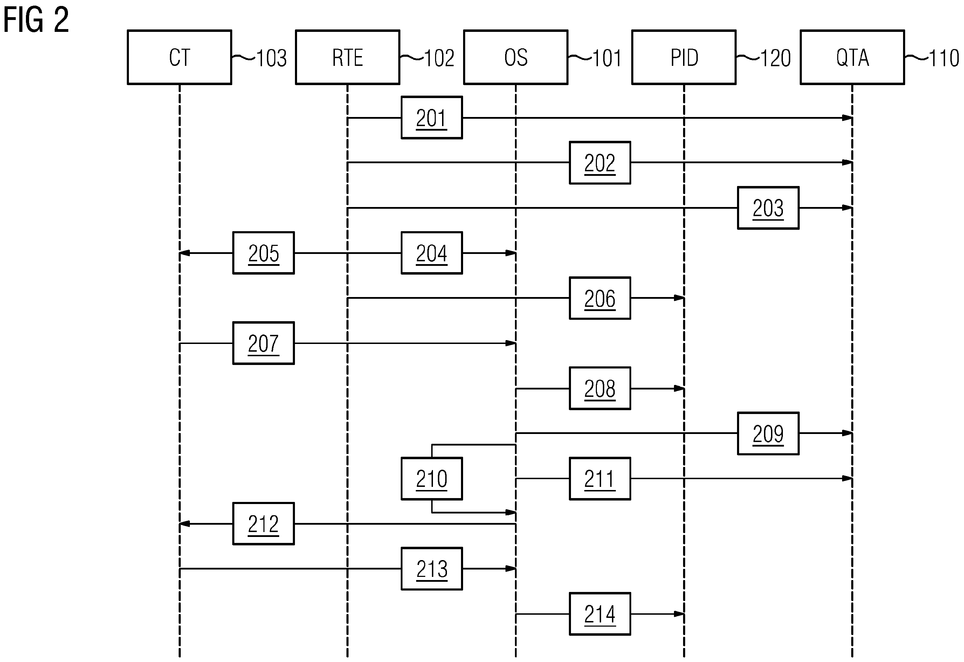

Entsprechend Schritt 201 des in Figur 2 dargestellten Ablaufdiagramms zur Initialisierung und Nutzung der Speicherkontingent-Datenbank 110 werden zunächst die Speicherkontingent-Richtlinien 141 in die Speicherkontingent-Datenbank 110 eingespielt und der jeweilige Container-Speicherkontingent-Identifikator abgeleitet. Dies wird durch die Container-Laufzeitumgebung 102 angestoßen. Vor Initialisierung des jeweiligen Containers 103 liest die Container-Laufzeitumgebung 102 in Schritt 202 aus der Speicherkontingent-Datenbank 110 Informationen über eine aktuelle Speichernutzung der einzubindenden Verzeichnisse 140. Außerdem fragt die Container-Laufzeitumgebung 102 die Speicherkontingent-Datenbank 110 nach existierenden Container-Speicherkontingent-Identifikatoren ab, die den einzubindenden Verzeichnissen 140 bereits zugeordnet sind (Schritt 203). Bei ausreichenden Ressourcen startet die Container-Laufzeitumgebung 102 über das Host-Betriebssystem 101 entsprechend Schritt 204 einen Rechenprozess für den jeweiligen Container 103 und bindet die für den jeweiligen Container 103 entsprechend den Container-Konfigurationsinformationen 131 vorgesehenen Verzeichnisse 140 in Schritt 205 mittels bind mount ein.

Nach Einbindung der Verzeichnisse 140 schreibt die Container-Laufzeitumgebung 102 den Prozess-Identifikator des für den Container 103 gestarteten Rechenprozesses in die Container-Rechenprozess-Datenbank 120 und ordnet diesem dort den in Schritt 201 abgeleiteten Container-Speicherkontingent-Identifikator zu (Schritt 206). Sobald der für den Container 103 gestartete Rechenprozess gemäß Schritt 207 eine Schreibzugriffsanforderung auf ein Verzeichnis 140 innerhalb des Host-Dateisystems 104 per Syscall an das Host-Betriebssystem 101 sendet, erfasst das Host-Betriebssystem 101 in Schritt 208 den Prozess-Identifikator und fragt den diesem zugeordneten Container-Speicherkontingent-Identifikator aus der Container-Rechenprozess-Datenbank 120 ab. Anschließend fragt das Host-Betriebssystem 101 den Eintrag aus der Container-Speicherkontingent-Datenbank 110 ab, der diesem Container-Speicherkontingent-Identifikator zugeordnet ist (Schritt 209).

Grundsätzlich können einer laufenden Container-Instanz mehrere Speicherkontingent-Richtlinien 141 zugeordnet sein. In diesem Fall werden sämtliche Container-Speicherkontingent-Identifikatoren ermittelt und an die Container-Laufzeitumgebung 102 zurückgemeldet. Dementsprechend werden dem jeweiligen Rechenprozess in der Container-Rechenprozess-Datenbank 120 mehrere Container-Speicherkontingent-Identifikatoren zugeordnet. Bei mehreren ggf. konkurrierend anzuwendenden Speicherkontingent-Richtlinien 141 kann beispielsweise immer die restriktivste Speicherkontingent-Richtlinie angewendet werden. Alternativ dazu kann vorgesehen sein, dass eine zeitliche Reihenfolge einer Anwendung zueinander konkurrierender Speicherkontingent-Richtlinien ausschlaggebend ist. In diesem Fall bleibt die Speicherkontingent-Richtlinie angewendet, die zuerst angewendet wird, unbeschadet davon, ob später noch andere Speicherkontingent-Richtlinien anwendbar werden.

Sofern und solange ausreichend Ressourcen verfügbar sind und ein jeweiliges Container-Speicherkontingent noch nicht ausgeschöpft ist, startet das Host-Betriebssystem 101 in Schritt 210 einen Schreibvorgang entsprechend der in Schritt 207 gesendeten Schreibzugriffsanforderung. Hierbei aktualisiert das Host-Betriebssystem 101 mit jedem geschriebenen Block den jeweiligen in der Speicherkontingent-Datenbank 110 gespeicherten Eintrag und überprüft das jeweilige Container-Speicherkontingent auf seine Ausschöpfung (Schritt 211). Wenn insbesondere sämtliche Blöcke entsprechend der Schreibzugriffsanforderung in das jeweilige Verzeichnis 140 geschrieben werden können, beendet das Host-Betriebssystem 101 den Schreibvorgang und sendet in Schritt 212 eine Benachrichtigung hierüber an den für den Container 103 gestarteten Rechenprozess. In entsprechender Weise verfährt das Host-Betriebssystem, wenn keine ausreichenden Ressourcen zur Verfügung stehen bzw. das jeweilige Container-Speicherkontingent ausgeschöpft ist.

Soll auf Veranlassung durch den Container 103 entsprechend Schritt 213 eine zusätzliche Container-Instanz gestartet werden, überprüft das Host-Betriebssystem 101 anhand der Container-Rechenprozess-Datenbank 120, ob dort für die zusätzliche Container-Instanz bereits ein Eintrag besteht (Schritt 214). Ist dies der Fall, wird der bestehende Eintrag verwendet bzw. aktualisiert. Andernfalls wird für die zusätzliche Container-Instanz ein neuer Eintrag in der Container-Rechenprozess-Datenbank 120 erzeugt.

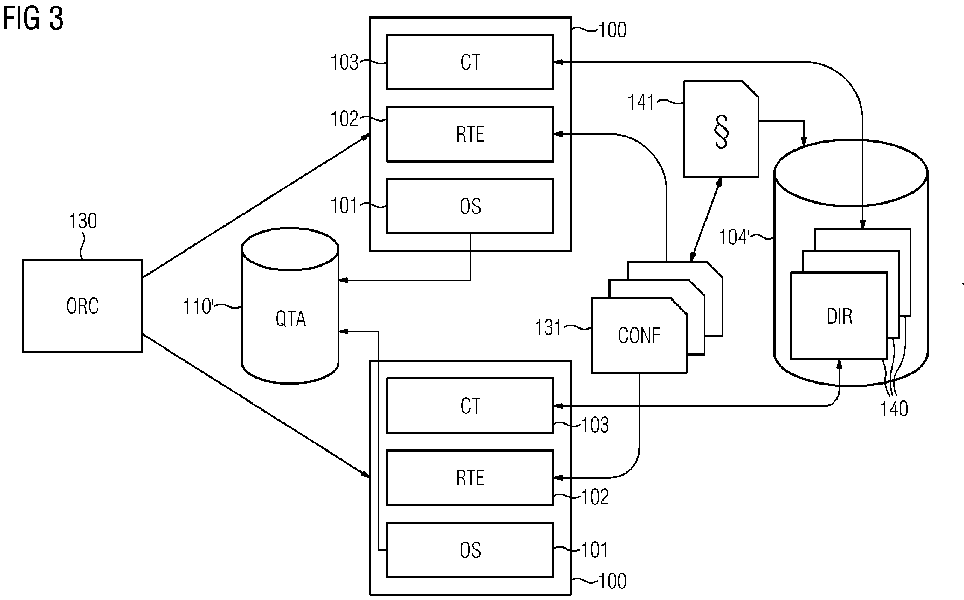

Entsprechend der in Figur 3 dargestellten Ausführungsform eines Systems zur Bereitstellung von Steuerungsanwendungen können mehrere Hosts 100 vorgesehen sein, auf denen jeweils eine Container-Laufzeitumgebung 102 eingerichtet ist und die ein gemeinsames Host-Dateisystem 104' nutzen. Dabei ist den Hosts 100 eine Orchestrierungskomponente 130 zugeordnet, die ein Anlegen, ein Löschen bzw. eine Änderung von Containern 103 erfasst und die Container 103 mit ihrem jeweiligen Ausführungsstatus registriert. Das Anlegen, das Löschen bzw. die Änderung der Container 103 umfasst insbesondere jeweils ein Allokieren oder Freigeben von Ressourcen im jeweiligen Host 100 bzw. im gemeinsamen Host-Dateisystem 104'. Somit können die Container 103 jeweils von einem Host 100 auf einen anderen Host 100 zur dortigen Ausführung migriert werden bzw. auf mehreren Hosts 100 zeitgleich ausgeführt werden.

Auch bei der in Figur 3 dargestellten Ausführungsform werden anhand der aus den Container-Konfigurationsinformationen 131 extrahierten Nutzungsinformationen für in das gemeinsame Host-Dateisystem 104' einzubindende Container-Verzeichnisse 140 Speicherkontingent-Richtlinien 141 zugeordnet. Unter Anwendung der zugeordneten Speicherkontingent-Richtlinien 141 werden dann die Container-Verzeichnisse 140 in das gemeinsame Host-Dateisystem 104' eingebunden und hinsichtlich ihrer Speichernutzung mittels einer gemeinsamen Speicherkontingent-Datenbank 110' überwacht.

## Patentansprüche

1. Verfahren zur Bereitstellung von Steuerungsanwendungen, bei dem
- die Steuerungsanwendungen mittels Software-implementierten Containern (103) bereitgestellt werden, die jeweils in eine auf einem Host (100) eingerichtete Container-Laufzeitumgebung (102) ladbar und dort ausführbar sind,
- aus Container-Konfigurationsinformationen (131) jeweils für den jeweiligen Container Nutzungsinformationen extrahiert und anhand der Nutzungsinformationen für in ein Host-Dateisystem (104) einzubindende Verzeichnisse (140), die für die Container entsprechend den Container-Konfigurationsinformationen vorgesehen sind, jeweils durch ein Host-Betriebssystem (101) umzusetzende Speicherkontingent-Richtlinien (141) zugeordnet werden,
- die Container (103) anhand der jeweiligen Container-Konfigurationsinformationen (131) initialisiert werden, wobei die für die Container jeweils vorgesehenen Verzeichnisse (140) unter Anwendung der zugeordneten Speicherkontingent-Richtlinien (141) in das Host-Dateisystem (104) eingebunden und hinsichtlich einer Speichernutzung der jeweiligen Container mittels einer Speicherkontingent-Datenbank (110) überwacht werden.

2. Verfahren nach Anspruch 1,
bei dem die Nutzungsinformationen jeweils eine Container-Speicherabbild-Kennung, eine Container-Kennung und/oder eine digitale Signatur der jeweiligen Container-Konfigurationsinformationen umfassen und bei dem die Container-Konfigurationsinformationen jeweils eine Container-Konfigurationsdatei oder Kommandozeilenparameter umfassen.

3. Verfahren nach einem der Ansprüche 1 oder 2,
bei dem die Speichernutzung der Container jeweils in der Speicherkontingent-Datenbank (110) erfasst wird.

4. Verfahren nach einem der Ansprüche 1 bis 3,
bei dem zur Umsetzung der zugeordneten Speicherkontingent-Richtlinien jeweils pro Container ein Eintrag in der Speicherkontingent-Datenbank angelegt wird.

5. Verfahren nach Anspruch 4,
bei dem für die zugeordneten Speicherkontingent-Richtlinien jeweils pro Container und Benutzer oder Benutzergruppe ein Eintrag in der Speicherkontingent-Datenbank angelegt wird.

6. Verfahren nach einem der Ansprüche 1 bis 5,
bei dem ein Rechenprozess für den jeweiligen Container gestartet wird, wenn dieser initialisiert wird, wobei jedem Rechenprozess ein Prozess-Identifikator zugeordnet ist, bei dem jedem Eintrag in der Speicherkontingent-Datenbank ein Container-Speicherkontingent-Identifikator zugeordnet wird und bei dem Zuordnungen zwischen den Prozess-Identifikatoren und den Container-Speicherkontingent-Identifikatoren erstellt werden.

7. Verfahren nach Anspruch 6,
bei dem bei Schreibzugriffen der für die Container gestarteten Rechenprozesse auf das Host-Dateisystem die jeweiligen Prozess-Identifikatoren erfasst werden, bei dem anhand der Zuordnungen die jeweiligen Container-Speicherkontingent-Identifikatoren ermittelt werden und bei dem die Speichernutzung der Container jeweils anhand den ermittelten Container-Speicherkontingent-Identifikatoren zugeordneten Einträgen in der Speicherkontingent-Datenbank überwacht wird.

8. Verfahren nach Anspruch 7,
bei dem bei den Schreibzugriffen der für die Container gestarteten Rechenprozesse auf das Host-Dateisystem eine aktuelle Speichernutzung der jeweiligen Container ermittelt wird und bei dem der jeweilige Eintrag in der Speicherkontingent-Datenbank dementsprechend aktualisiert wird.

9. Verfahren nach einem der Ansprüche 6 bis 8,
bei dem für jede Zuordnung zwischen einem Prozess-Identifikator und einem Container-Speicherkontingent-Identifikator ein Eintrag in einer Container-Rechenprozess-Datenbank (120) erstellt wird und bei dem jeder Eintrag in der Container-Rechenprozess-Datenbank eine Verknüpfung zu einer jeweils zugeordneten Speicherkontingent-Richtlinie umfasst.

10. Verfahren nach Anspruch 9,
bei dem die Container-Rechenprozess-Datenbank durch einen in einem Kernel-Modus ablaufenden Rechenprozess verwaltet wird und bei dem Zugriffe auf die Container-Rechenprozess-Datenbank über Betriebssystemaufrufe, insbesondere Syscalls, erfolgen.

11. Verfahren nach einem der Ansprüche 1 bis 10,
bei dem die Speicherkontingent-Datenbank durch einen in einem Kernel-Modus ablaufenden Rechenprozess verwaltet wird und bei dem Zugriffe auf das Host-Dateisystem durch für die Container gestartete Rechenprozesse über Betriebssystemaufrufe, insbesondere Syscalls, erfolgen.

12. Verfahren nach einem der Ansprüche 1 bis 10,
bei dem die Container-Laufzeitumgebung auf dem Host-Betriebssystem abläuft und die Container anhand der jeweiligen Container-Konfigurationsinformationen erzeugt werden.

13. Verfahren nach einem der Ansprüche 1 bis 12,
bei dem mehrere Hosts (100) vorgesehen sind, auf denen jeweils eine Container-Laufzeitumgebung (102) eingerichtet ist und die ein gemeinsames Host-Dateisystem (104') nutzen, bei dem anhand der aus den Container-Konfigurationsinformationen (131) extrahierten Nutzungsinformationen für in das gemeinsame Host-Dateisystem einzubindende Container-Verzeichnisse (140) Speicherkontingent-Richtlinien (141) zugeordnet werden und bei dem die Container-Verzeichnisse unter Anwendung der zugeordneten Speicherkontingent-Richtlinien in das gemeinsame Host-Dateisystem eingebunden und hinsichtlich ihrer Speichernutzung mittels einer gemeinsamen Speicherkontingent-Datenbank (110') überwacht werden.

14. Verfahren nach Anspruch 13,
bei dem die Container jeweils von einem Host auf einen anderen Host zur dortigen Ausführung migrierbar und/oder auf mehreren Hosts zeitgleich ausführbar sind.

15. Verfahren nach einem der Ansprüche 13 oder 14,
bei dem eine mehreren Hosts zugeordnete Orchestrierungskomponente (130) ein Anlegen, ein Löschen und/oder eine Änderung der Container (103) erfasst und die Container mit ihrem jeweiligen Ausführungsstatus registriert und bei dem das Anlegen, das Löschen und/oder die Änderung der Container jeweils ein Allokieren oder Freigeben von Ressourcen im jeweiligen Host und/oder im gemeinsamen Host-Dateisystem (104') umfasst.

16. System zur Bereitstellung von Steuerungsanwendungen mit
- zumindest einem Host (100),
- zumindest einer auf dem zumindest einen Host eingerichteten Container-Laufzeitumgebung (102),
- mehreren Software-implementierten Containern (103) zur Bereitstellung der Steuerungsanwendungen, wobei die Container jeweils in die zumindest eine auf dem zumindest einen Host (100) eingerichtete Container-Laufzeitumgebung (102) ladbar und dort ausführbar sind,
- wobei der zumindest eine Host (100) dafür eingerichtet und ausgestaltet ist, aus Container-Konfigurationsinformationen (131) jeweils für den jeweiligen Container Nutzungsinformationen zu extrahieren und anhand der Nutzungsinformationen für in ein Host-Dateisystem (104) einzubindende Verzeichnisse (140), die für die Container (103) entsprechend den Container-Konfigurationsinformationen vorgesehen sind, jeweils durch ein Host-Betriebssystem (101) umzusetzende Speicherkontingent-Richtlinien (141) zuzuordnen,
- wobei der zumindest eine Host (100) dafür eingerichtet und ausgestaltet ist, die Container (103) anhand der jeweiligen Container-Konfigurationsinformationen (131) zu initialisieren, die für die Container jeweils vorgesehenen Verzeichnisse (140) unter Anwendung der zugeordneten Speicherkontingent-Richtlinien (141) in das Host-Dateisystem (104) einzubinden und hinsichtlich einer Speichernutzung der jeweiligen Container mittels einer Speicherkontingent-Datenbank (110) zu überwachen.
